# EUROPÄISCHE PATENTSCHRIFT

(11) **EP 0 988 170 B1**
(45) Veröffentlichungstag und Bekanntmachung des Hinweises auf die Patenterteilung: **30.05.2001**
(21) Anmeldenummer: 98934964.2
(22) Anmeldetag: 16.06.1998
(51) Int. Cl.: B60N 2/42, B60N 2/48

(54) **FAHRZEUGSITZ MIT EINER KOPFSTÜTZE**
CAR SEAT WITH A HEADREST
SIEGE DE VEHICULE AVEC APPUI-TETE

(30) Priorität: 16.06.1997 DE 29710511 U
(43) Veröffentlichungstag der Anmeldung: 29.03.2000
(73) Patentinhaber: TRW Occupant Restraint Systems GmbH & Co. KG, 73551 Alfdorf (DE)
(72) Erfinder: BIGI, Dante, I 10137 Torino (IT); HEILIG, Alexander, D-73550 Wissgoldingen (DE)
(74) Vertreter: Kitzhofer, Thomas, Dipl.-Ing.
(86) Internationale Anmeldenummer: EP9803625
(87) Internationale Veröffentlichungsnummer: WO9857818

(56) Entgegenhaltungen:
- EP-A- 0 593 845
- EP-A- 0 627 340
- DE-A- 3 900 495
- DE-U- 29 603 991
- US-A- 3 420 572
- US-A- 3 680 912
- US-A- 5 056 816
- US-A- 5 110 185

## Beschreibung

Die Erfindung betrifft einen Fahrzeugsitz mit einer an der Rückenlehne angeordneten Kopfstütze, die eine Abstützfläche aufweist, welche der Kopf des Fahrzeuginsassen im Rückhaltefall berühren kann.

Eine Kopfstütze verhindert unter anderem im Falle eines Heckaufpralls, daß der Kopf eines Fahrzeuginsassen relativ zum Fahrzeug nach hinten geschleudert wird. Üblicherweise sind Kopfstützen in die Rückenlehne einsteckbar, höhenverstellbar und zum Kopf des Fahrzeuginsassen hin verstellbar. Eine optimale, an die Lage des Kopfes angepaßte Ausgangsstellung der Kopfstütze soll einen minimalen Abstand des Kopfes zur Kopfstütze aufweisen. Eine nicht optimale Anordnung der Kopfstütze kann zu einer hohen Belastung der Halswirbel des Fahrzeuginsassen in einem Rückhaltefall führen.

Es wurde bereits vorgeschlagen, die Kopfstütze in einem Rückhaltefall dem Kopf des Insassen aktiv anzunähern. Trotzdem kann bei nicht optimaler Höheneinstellung der Kopfstütze eine hohe Belastung der Halswirbel des Fahrzeuginsassen auftreten, da es bei einer zu niedrigen oder zu hohen Anordnung der Kopfstütze nicht möglich ist, den Kopf des Insassen optimal aufzufangen.

Aus der EP 0 593 845 A1 ist ein Fahrzeugsitz bekannt, bei dem die Kopfstütze mit einem Gassack ausgestattet ist. Dieser Gassack tritt im Rückhaltefall aus der Vorderseite der Kopfstütze aus und reduziert so den Abstand des Kopfes von der Kopfstütze. Auch hier muß die Kopfstütze möglichst optimal in der Höhe eingestellt sein, um eine ausreichende Rückhaltewirkung zu erreichen.

Aus der gattungsgemäßen U.S. 3 420 572 ist eine Kopfstütze bekannt, die im normalen Fahrbetrieb vollständig in der Rückenlehne des Fahrzeugs untergebracht ist. Die Kopfstütze wird erst im Rückhaltefall vertikal nach oben gefahren. Der Abstand der dann zur Verfügung stehenden Kopfstütze vom Kopf des Insassen ist sehr groß, zumal sich die Kopfstütze nicht zusätzlich auch noch in Richtung Kopf des Insassen bewegt. Darüber hinaus ist diese Konstruktion sehr gefährlich, denn der Insasse darf sich nicht zu weit nach hinten gelehnt haben, um nicht von der sich abrupt nach oben bewegenden Kopfstütze getroffen zu werden. Zudem muß eine sehr hohe Zuverlässigkeit gegeben sein.

Aufgabe der Erfindung ist es, einen Fahrzeugsitz mit einer Kopfstütze zu schaffen, die den Kopf eines Fahrzeuginsassen unabhängig davon abstützt, ob die Kopfstütze optimal eingestellt ist. Gelöst wird diese Aufgabe bei einem Fahrzeugsitz der eingangs genannten Art dadurch, daß die Kopfstütze eine Expansionsvorrichtung aufweist, die die Abstützfläche der Kopfstütze im Rückhaltefall vergrößert. Außerdem wird die Kopfstütze zumindest dann relativ zur Rückenlehne höhenverstellt, wenn die Kopfstütze so nahe an der Rückenlehne angeordnet ist, daß die Rückenlehne eine vollständige Vergrößerung der Abstützfläche verhindern würde. Durch die Expansionsvorrichtung wird gemäß dem der Erfindung zugrundeliegenden Gedanken die Abstützfläche der Kopfstütze vergrößert, so daß die Kopfstütze in jeglicher Ausgangsstellung den Kopf des Insassen gleichermaßen gut zurückhält. Das durch eine Verstellvorrichtung notwendige Höhenverstellen bewirkt, daß die vergrößerte Abstützfläche auch tatsächlich vollständig zur Verfügung steht. Denn es könnte ansonsten sein, daß die Rückenlehne den Expansionsvorgang so hindert, daß die Abstützfläche nur unvollständig oder zeitlich stark verzögert vergrößert wird.

Vorzugsweise wird die Kopfstütze im Rückhaltefall in eine vorgegebene Grundstellung bewegt, in der sich die Abstütztläche von annähernd der Rückenlehne aus nach oben erstreckt und eine optimale Schutzwirkung für unterschiedlich große Insassen, unabhängig von der Ausgangsstellung, bietet. In dieser Stellung behindert die Rückenlehne den Vergrößerungsvorgang nicht. Außerdem kann sich die Kopfstütze durch die Vergrößerung ihres Volumens im Rückhaltefall, wenn die Rückenlehne bei einer zu tief eingestellten Kopfstütze eine vollständige Vergrößerung der Abstützfläche verhindern würde, an der Rückenlehne abstützen und dadurch selbst in die Grundstellung verschieben.

Die Erfindung kann beispielsweise in zwei Varianten realisiert werden. Gemäß der ersten Ausführungsform wird die Abstützfläche durch Aufblasen eines Gassacks erreicht. Bei der zweiten Ausführungsform ist die Expansionsvorrichtung eine rein mechanische Vorrichtung, mittels der die Abstützfläche vergrößert wird, beispielsweise durch Verschwenken von Hebeln oder Auseinanderbewegen von einzelnen Polsterelementen der Kopfstütze. Bei jeder dieser Ausführungsformen kann die Kopfstütze außerdem in einem Rückhaltefall aktiv näher zum Kopf des Insassen bewegt werden.

In den beigefügten Zeichnungen zeigen:
- Fig. 1a und 1b eine teilgeschnittene schematische Seitenansicht einer Rückenlehne eines Fahrzeugsitzes mit Kopfstütze in nicht aktiviertem bzw. in aktiviertem Zustand gemäß einer ersten Ausführungsform;
- Fig. 2a und 2b eine schematische Ansicht der Rückenlehne mit Kopfstütze gemäß den Figuren 1a und 1b, wobei die Ausgangsstellung der Kopfstütze im nicht aktivierten Zustand höher ist als in der in Figur la gezeigten Stellung;
- Fig. 3a und 3b eine teilgeschnittene schematische Seitenansicht einer zweiten Ausführungsform der Kopfstütze in nicht aktiviertem bzw. aktiviertem Zustand;
- Fig. 4a und 4b eine teilgeschnittene schematische Seitenansicht einer dritten Ausführungsform der Kopfstütze im nicht aktivierten bzw. aktivierten Zustand;
- Fig. 5a und 5b eine Variante zu der in den Figuren 4a und 4b gezeigen Lösung im nicht aktivierten bzw. aktivierten Zustand;
- Fig. 6 eine Explosionsansicht einer Kopfstütze als Teil des erfindungsgemäßen Fahrzeugsitzes gemäß einer weiteren Ausführungsform; und
- Fig. 7 eine Explosionsansicht einer Kopfstütze als Teil des erfindungsgemäßen Fahrzeugsitzes gemäß noch einer weiteren Ausführungsform.

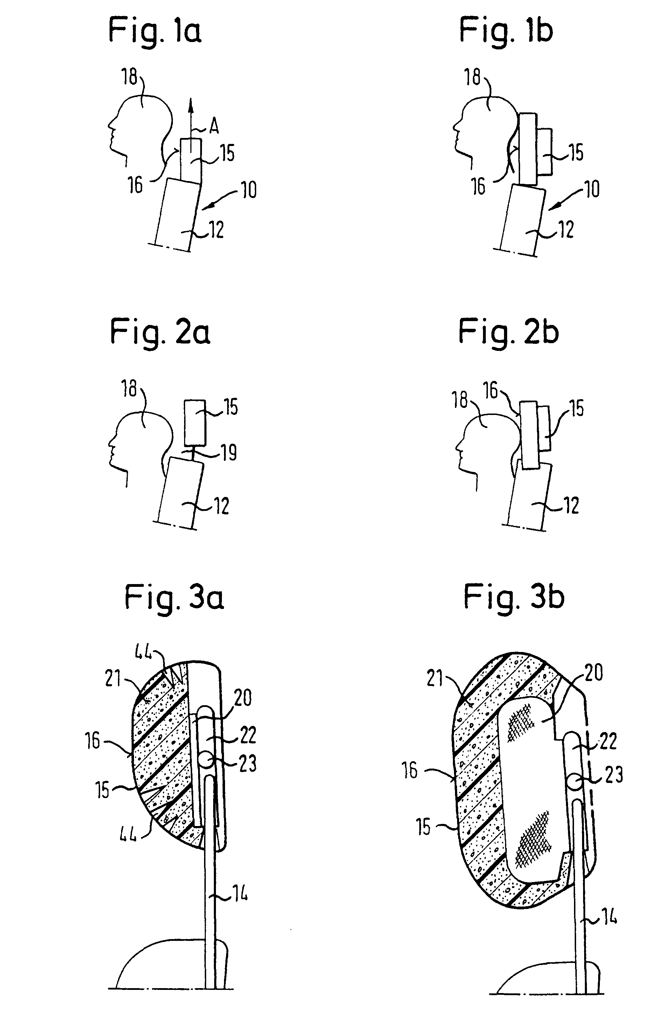

Der in den Figuren 1a und 1b teilweise gezeigte Fahrzeugsitz 10 ist mit einer herkömmlich ausgebildeten Rückenlehne 12 versehen, aus der nach oben zwei Lagerstangen 14 eines Lagerbügels herausragen, an dem eine Kopfstütze 15 schwenkbar gelagert ist. Mittels der in die Rückenlehne 12 eingeschobenen Lagerarme 14 ist die Kopfstütze 15 in üblicher Weise höhenverstellbar. Fig. 1a zeigt die Position der Kopfstütze in einer Ausgangsstellung und den Kopf 18 eines Fahrzeuginsassen vor einem Rückhaltefall. Der Rückhaltefall kann beispielsweise durch einen Frontal- oder Heckaufprall zustandekommen. Die Kopfstütze 15 ist in Fig. la in die tiefstmögliche Ausgangsstellung gebracht und in der Höhe relativ zum Kopf 18 des Fahrzeuginsassen schlecht eingestellt. In einem Rückhaltefall würde die so angeordnete Kopfstütze zu Halswirbelverletzungen führen.

Gemäß der vorliegenden Erfindung wird aber die Abstützfläche 16 der Kopfstütze 15 in einem Rückhaltefall vergrößert. Da die Kopfstütze 15 in Fig. 1a beinahe oder vollständig am oberen Ende der Rückenlehne 12 anliegt, wird sie durch die Vergrößerung ihrer Abstützfläche, auf die der Kopf 18 im Rückhaltefall aufprallt, relativ zur Rückenlehne verstellt, da ansonsten eine vollständige Vergrößerung der Abstützfläche auf das in Fig. 1b gezeigte Ausmaß von der Rückenlehne verhindert werden würde. In diesem Fall wird die Kopfstütze 15 durch die Vergrößerung der Abstützfläche 16 in Richtung des Pfeiles A in Fig. 1a relativ zum Kopf des Insassen nach oben, also in vertikaler Richtung, aktiv in eine Grundstellung bewegt. Fig. 1b zeigt die Endposition und Grundstellung der Kopfstütze 15 nach Vergrößerung ihrer Abstützfläche 16. In dieser Grundstellung hat sich die Kopfstütze 15 nach oben verstellt oder, was auch möglich ist, ist durch eine nicht gezeigt Vorrichtung nach oben verstellt worden. Die Abstützfläche 16 ist zudem vergrößert, so daß der Kopf 18 des Insassen trotz der eigentlich nicht an die Lage des Kopfes 18 angepaßten Ausgangsstellung optimal zurückgehalten wird. Dadurch, daß beim Aktivieren der Kopfstütze 15 auch der Abstand zum Kopf 18 deutlich verringert wird (z. B. durch Verschieben der Kopfstütze in Richtung Kopf oder durch deren Volumenvergrößerung) und die Abstützfläche 16 näher am Kopf angeordnet ist als in der Ausgangsstellung (Fig. 1a), ergibt sich eine geringere Beschleunigung des Kopfes im Rückhaltefall.

In Fig. 2a ist eine andere Ausgangsstellung vor einem Rückhaltefall dargestellt, in der die Kopfstütze 15 eigentlich zu hoch eingestellt ist. Auch in diesem Fall würde die Kopfstütze 15 den Kopf 18 des Insassen in einem Rückhaltefall nicht optimal zurückhalten. Mit der Vergrößerung der Abstützfläche 16 der Kopfstütze 15 wird auch der Zwischenraum 19 zwischen dem oberen Ende der Rückenlehne 12 und dem unteren Ende der Kopfstütze 15 ausgefüllt, wodurch die Belastungen der Halswirbel des Insassen wesentlich reduziert werden können und der Kopf des Insassen optimal zurückgehalten wird.

Die Kopfstütze 15 selbst könnte aber auch aktiv nach unten in Richtung der Rückenlehne 12 in die in Fig. 1b gezeigte Grundstellung verstellt werden, beispielsweise wenn die Kopfstütze so nahe an der Innenfläche des Fahrzeugdachs angeordnet ist, daß eine vollständige Vergrößerung der Abstützfläche verhindert werden würde. Außerdem kann, wie gesagt, die Kopfstütze 15 nach vorne in Richtung des Kopfes 18 des Insassen, d.h. horizontal, bewegbar sein. Dies verringert den Abstand des Kopfes 18 zur Kopfstütze 15 weiter, wodurch eine weitere Verringerung der Belastungen der Halswirbel des Fahrzeuginsassen erzielbar ist. Die Annäherung der Abstützfläche 16 an den Kopf 18 des Insassen kann an die Vergrößerung der Abstützfläche 16 der Kopfstütze 15 gekoppelt sein, indem das Volumen der Kopfstütze 15 vergrößert wird. Die Ausdehnung der Kopfstütze 15 erfolgt dabei nicht nur nach oben und nach unten relativ zum oberen Ende der Rückenlehne 12, sondern auch nach vorne zum Kopf 18 des Insassen hin. Aus diese Weise wird der Abstand zwischen der Kopfstütze 15 und dem Kopf 18 des Insassen verringert. Außerdem kann die Vergrößerung der Abstützfläche 16 der Kopfstütze 15 auch seitlich, d.h. orthogonal zur Zeichenebene erfolgen, um den Auffangbereich der Kopfstütze 15 weiter zu vergrößern, so daß der Kopf auch zurückgehalten wird, wenn er sich "Out-of-Position" befinden sollte.

Die Bewegung der Kopfstütze 15 nach vorne kann auch durch eine zusätzliche Vorrichtung erreicht werden. Diese zusätzliche Vorrichtung kann entweder unabhängig von der Vergrößerung der Kopfstütze 15 arbeiten oder mit dieser gekoppelt sein. In letzterem Fall wird die Kopfstütze 15 durch die Vergrößerung der Abstützfläche betätigt. Wenn andererseits diese Vorrichtung unabhängig von der Vergrößerung der Kopfstütze 15 arbeitet, wird sie im Rückhaltefall unabhängig davon betätigt, ob die Expansionsvorrichtung ausgelöst ist oder nicht. Diese zusätzliche Vorrichtung kann gegebenenfalls auch die Kopfstütze vertikal bewegen, d.h. zu der oder weg von der Rückenlehne. Dadurch wird die Kopfstütze in die Grundstellung gefahren, in der der Vergrößerung der Abstützfläche 16 keine Hindernisse entgegensetzt sind.

Die wenigstens eine Vorrichtung zur Vorwärts- und/oder Vertikalbewegung der Kopfstütze 15 kann z.B. eine Vorrichtung sein, wie sie in den deutschen Gebrauchsmustern 296 05 386.4, 296 03 991.8, 296 03 467.3, 296 14 978.0, 296 14 238.7 gezeigt ist.

Die Expansionsvorrichtung kann entweder ein aufblasbarer Gassack oder eine mechanische betätigte Vorrichtung sein. Eine Expansionsvorrichtung mit einem autblasbaren Gassack ist in den Figuren 3a und 3b gezeigt. Der aufblasbare Gassack 20 befindet sich in diesem Beispiel innerhalb der Kopfstütze 15, und zwar zwischen einem geschäumten Polster 21 und dem Rahmenteil 22 der Kopfstütze. Mit 23 ist ein Gasgenerator zum Aufblasen des Gassacks 20 dargestellt. Der Gassack 20 und der Gasgenerator 23 sind bis auf die Rückseite der Kopfstütze allseitig vom Polster 21 umgeben. Das Polster 21 ist Teil des Überzugs der Kopfstütze, die aus Polster 21 sowie einem Bezug besteht. Durch dieses Einbetten des Gasgenerators und des Luftsacks in das Polster wird der beim Zünden des Gasgenerators und Entfalten des Gassacks der entstehende Knall stark gedämpft. Wenn die Expansionsvorrichtung ausgelöst wird, wird der Gassack in der Kopfstütze aufgeblasen. Auf diese Weise vergrößert sich die Abstützfläche 16 der Kopfstütze 15 und verschiebt sich selbst, da sie sich an der Rückenlehne abstützt, in die Grundstellung. Der autblasbare Gassack 20 ist so geformt, daß er sich hauptsächlich nach oben und/oder nach unten hin entfaltet und sich die Kopfstütze 15 nach oben und nach unten hin vergrößert. Andererseits ist es möglich, den aufblasbaren Gassack 20 räumlich so zu begrenzen, daß er sich nur nach oben und nach unten hin erstreckt. In einer Variante dieser Ausführungsform befindet sich der Gassack 20 außerhalb der eigentlichen Kopfstütze 15, indem ein Gassackmodul an dem vorderen Teil der Kopfstütze angebracht ist und deren vorderen Teil bildet.

Eine andere Ausführungsform sieht vor, daß im Inneren der Kopfstütze eine durch den Gasgenerator aufblasbare Kammer vorgesehen ist, die von dem Überzug der Kopfstütze begrenzt ist. Der Überzug besteht aus einem Material mit geringer Gasdurchlässigkeit und ist dehnbar, so daß der Gassack selbst weggelassen werden kann, da der dehnbare Überzug die Funktion des Gassacks übernimmt und aufgeblasen wird. In dieser Ausführungsform besteht der Überzug aus einem Polster 21 und einem dieses umgebenden Bezug, wobei Polster und Bezug eine geringe Gasdurchlässigkeit aufweisen.

Ferner ist es möglich, den Gasgenerator 23 in der Rückenlehne 12 anzuordnen. Wenigstens eine der Lagerstangen 14 ist innen hohl ausgebildet und weist dadurch einen Gasführungskanal auf (nicht gezeigt). über den das erzeugte Gas in das Innere der Kopfstütze geleitet wird.

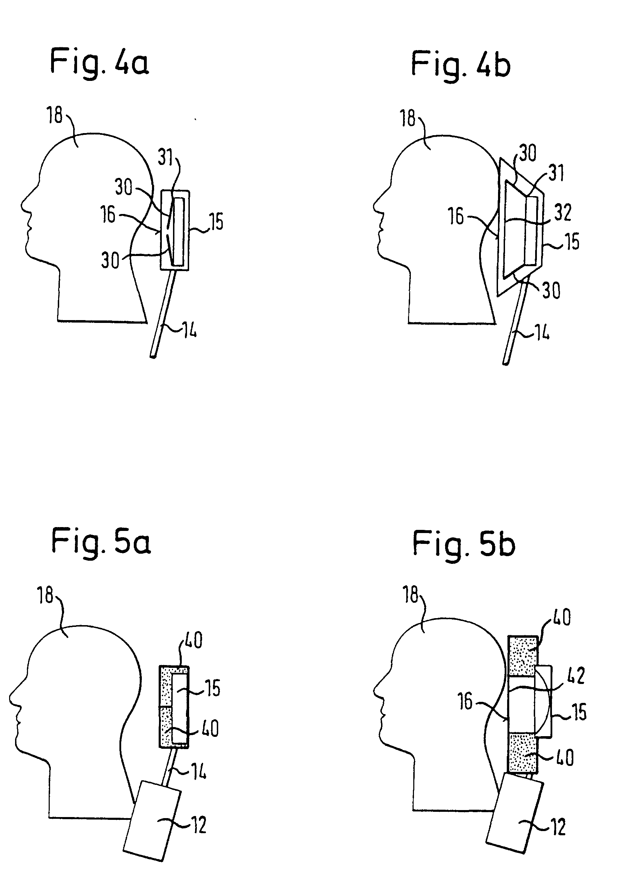

In einer weiteren Ausführungsform der vorliegenden Erfindung ist die Expansionsvorrichtung rein mechanisch ausgeführt. Solche mechanischen Expansionsvorrichtungen sind in den Figuren 4a, 4b, 5a und 5b gezeigt. Die mechanische Expansionsvorrichtung in den Figuren 4a und 4b besteht aus zwei Hebel 30, die an einem ihrer Enden 31 drehbar gelagert sind. Ein flexibles Band 32 verbindet die dem Lagerende entgegengesetzen freien Enden der Hebel. Beim Schwenken der beiden Hebel in entgegengesetzte Richtungen wird das Band 32 gespannt und bildet eine Abstützwand innerhalb der Kopfstütze 15. Durch dieses Auseinanderschwenken der Hebel wird die Abstützfläche 16 der Kopfstütze 15 vergrößert und näher zum Kopf des Insassen hin verlagert.

Die Schwenkbewegung der Hebel 30 kann durch verschiedene Antriebe erreicht werden, beispielsweise einen Federantrieb oder einen pyrotechnischen Antrieb. Die verschwenkte Endposition der Hebel 30 kann z. B. durch einen geeigneten Ratschenmechanismus fixiert werden.

In den Figuren 5a und 5b ist eine weitere Ausführungsform gezeigt, gemäß der die Kopfstütze zwei gepolsterte Abstützteile 40 aufweist, die vertikal in entgegengesetzte Richtungen im Rückhaltefall bewegt werden (vgl. Fig. 5b) und dabei zwischen sich eine aus einem Gewebeteil bestehende Abstützwand 42 aufspannen und die Abstützfläche vergrößern.

Der das Rahmenteil der Kopfstütze umgebende Überzug, d.h. die gesamte Polster und/oder der Stoffbezug, der das Polster abdeckt, kann aus einem dehnbaren Material, im Falle des Stoffbezugs z.B. aus Stretch, sein. Darüber hinaus ist es möglich, den Überzug mit wenigstens einem gefalteten Bereich mit sich ins Innere der Kopfstütze erstreckenden Taschen (nicht gezeigt) zu versehen. Dieser gefaltete Bereich wird im Rückhaltefall zur Vergrößerung der Abstützfläche entfaltet und dient dazu, ein Ausreißen des Polsters zu vermeiden. Die Taschen können durch Reißnähte nach außen hin geschlossen sein, so daß sich vor Aktivierung der Expansionsvorrichtung eine geschlossene Abstützfläche 16 ergibt. Wenn die Expansionsvorrichtung ausgelöst wird, werden die Reißnähte durch die Expansion aufgerissen, und der gefaltene Bereich entfaltet sich. Um auch zu vermeiden, daß das Polster 21 beim Entfalten des Gassacks oder Aufblasen des Polsters zerstört wird, weist das Polster mehrere Einschnitte 44 auf, über die die Polster 21 bei der Volumenvergrößerung der Kopfstütze in definierter Weise seine Form ändert, wie dies in Fig. 3b gezeigt ist. Diese Einschnitte 44 sind insbesondere in den Bereichen der größten Beanspruchung des Polsters 21 vorgesehen, z.B. nahe der Abstützfläche 16. Bevorzugt deckt das Polster 21 den Gassack 20 im entfalteten Zustand wenigstens nach vorn und nach oben sowie nach unten ab, vorzugsweise auch im Bereich der Seiten und gegebenenfalls auf auch der Rückseite.

Eine besonders gute Rückhaltewirkung ist ferner dadurch erreichbar, daß die Position des Kopfes des Insassen durch geeignete Sensoren abgetastet wird und die Verstellbewegung wenigstens teilweise in Richtung Kopf erfolgt. Ferner kann bei Verwendung eines Gassacks dessen Härte auf die Aufprallintensität des Fahrzeugs im Rückhaltefall abgestimmt werden, z.B. durch Verwendung eines Mehrstufengasgenerators.

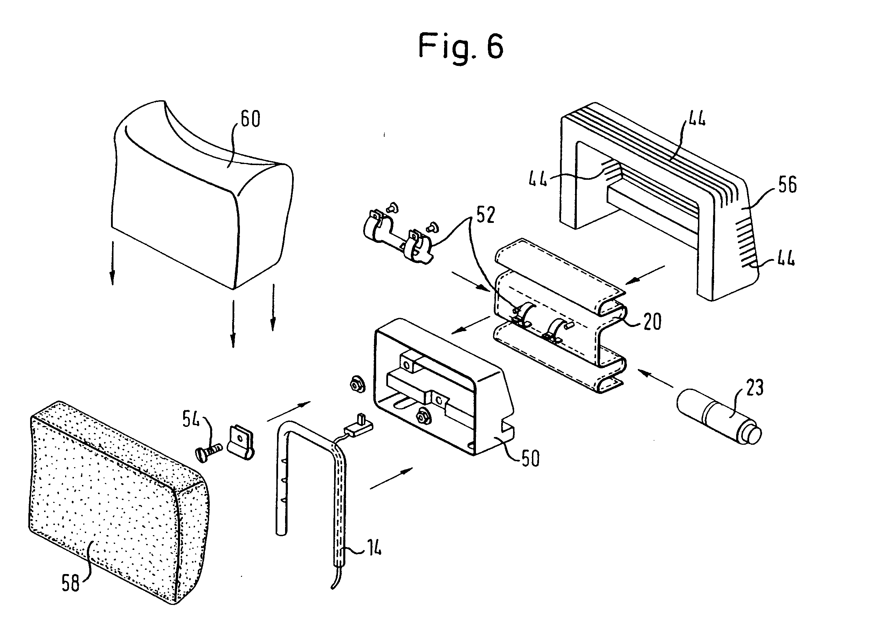

Fig. 6 zeigt eine weitere Ausführungsform, die sich durch eine sehr einfache Montierbarkeit der Kopfstütze sowie eine einfache Austauschbarkeit des Gasgenerators auszeichnet. Bei dieser Ausführungsform muß nach Aktivierung der Kopfstütze nur der Gasgenerator 23 ausgetauscht werden und nicht die gesamte Kopfstütze. Die Kopfstütze umfaßt in ihrem Inneren einen Korpus 50 aus formstabilem Material. Auf der Rückseite des Korpus 50 wird der Lagerbügel mit den Lagerstangen 14 befestigt. An der Vorderseite wird der Gassack 20 samt Gasgenerator 23 am Korpus 50 befestigt. Die Befestigung erfolgt dabei folgendermaßen: Zuerst wird eine Klemmschelle 52 in den Gassack 20 eingelegt. Anschließend wird der Gasgenerator 23 seitlich in die Klemmeschelle eingesetzt, so daß sich ein Gassackmodul ergibt. Dieser Modul wird am Korpus 50 über eine Schrauben- und Klipp-Verbindung 54 befestigt. Anschließend werden ein als Formteil ausgebildetes Polsterteil 56 und ein hinteres Polsterteil 58 aufgesetzt und ein Stoffbezug 60 über die Kopfstütze gestülpt, durch die die Polsterteile 56 und 58 aneinandergepreßt werden. Das vordere Polsterteil 56 weist die in der Figur 3a bereits angedeuteten zahlreichen Einschnitte 44 auf, die innenseitig und außenseitig vorgesehen sind und zu einer definierten Formänderung führen. Die Kopfstütze ist dabei so ausgebildet, daß sie aufgrund der Elastizität der Polsterteile 56, 58 und des Stoffbezugs 60 nach erfolgter Aktivierung wieder zurück in ihre Ausgangsform geht. Nach der Aktivierung muß nur der Gasgenerator ausgetauscht werden, was bei der in Fig. 6 gezeigten Ausführungsform auf sehr einfache Weise möglich ist. Der Gasgenerator kann auch durch einen Bajonett- oder Schraubverschluß am Gassackmodul befestigt sein.

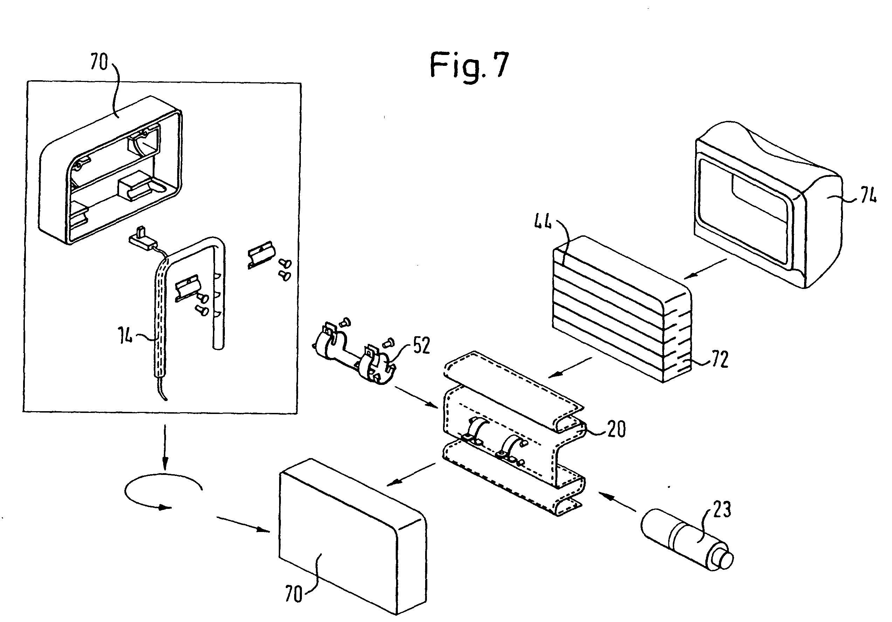

Die in Fig. 7 dargestellte Ausführungsform unterscheidet sich von der zuvor gezeigten dadurch, daß anstatt des Korpus 50 und des hinteren Polsterteils 58 ein Gehäuse 70 vorgesehen ist, welches in der umrahmten Detailzeichnung in Fig. 7 von vorn zu sehen ist. In dem Gehäuse wird der Lagerbügel befestigt. Das Gehäuse nimmt auch das Gassackmodul auf, das entsprechend dem in Fig. 6 gezeigten Gassackmodul ausgebildet ist und auf das deshalb nicht näher eingegangen werden muß. Vorderhalb des Gassackmoduls ist ein Polsterteil 72 vorgesehen, das zahlreiche Einschnitte 44 aufweist. Nachdem das Polsterteil 72 vor dem Gassackmodul angeordnet ist, wird ein Bezug 74 aus elastischem Kunststoffmaterial aufgesetzt und über Klipp-Verbindungen am Gehäuse 70 befestigt. Auch diese Ausführungsform zeichnet sich durch eine leichte Montage und Demontage sowie Austauschbarkeit des Gasgenerators 23 aus.

## Patentansprüche

1. Fahrzeugsitz (10) mit einer Rückenlehne (12) und einer verstellbaren Kopfstütze (15), die eine Abstützfläche (16) aufweist, welche der Kopf des Fahrzeuginsassen im Rückhaltefall berühren kann, dadurch gekennzeichnet, daß die Kopfstütze (16) eine Expansionsvorrichtung aufweist, die die Abstützfläche (16) der Kopfstütze (15) im Rückhaltefall vergrößert, und daß die Kopfstütze (15) im Rückhaltefall relativ zur Rückenlehne (12) nach oben verstellt wird, zumindest wenn die Kopfstütze (15) so nahe an der Rückenlehne (12) angeordnet ist, daß die Rückenlehne (12) eine vollständige Vergrößerung der Abstützfläche (16) verhindern würde.

2. Fahrzeugsitz nach Anspruch 1, dadurch gekennzeichnet, daß die Vergrößerung der Abstützfläche (16) in vertikaler und/oder horizontaler Richtung erfolgt.

3. Fahrzeugsitz nach einem der vorhergehenden Ansprüche, dadurch gekennzeichnet, daß die Kopfstütze (15) im Rückhaltefall ausgehend von wenigstens einigen Ausgangsstellungen in eine vorgegebene Grundstellung bewegt wird, in der sich die Abstützfläche (16) von annähernd der Rückenlehne (12) aus nach oben erstreckt und in der die Abstützfläche bei ihrer Vergrößerung nicht von der Rückenlehne (12) behindert wird.

4. Fahrzeugsitz nach Anspruch 3, dadurch gekennzeichnet, daß sich die Kopfstütze (15) durch eine Vergrößerung ihres Volumens im Rückhaltefall, wenn die Rückenlehne (12) bei einer zu tief eingestellten Kopfstütze (15) eine vollständige Vergrößerung der Abstützfäche (16) verhindern würde, an der Rückenlehne (12) abstützt und sich dadurch selbst in die Grundstellung verschiebt.

5. Fahrzeugsitz nach einem der vorhergehenden Ansprüche, dadurch gekennzeichnet, daß zur Vergrößerung der Abstützfläche (16) das Volumen der Kopfstütze (12) vergrößert wird und die Volumenvergrößerung wenigstens teilweise in Richtung des Kopfs des Insassens erfolgt.

6. Fahrzeugsitz nach einem der vorhergehenden Ansprüche, dadurch gekennzeichnet, daß die Expansionsvorrichtung einen aufblasbaren Gassack (20) aufweist.

7. Fahrzeugsitz nach Anspruch 6, dadurch gekennzeichnet, daß sich der Gassack (20) im entfalteten Zustand wenigstens teilweise außerhalb oder vollständig innerhalb der Kopfstütze (15) befindet.

8. Fahrzeugsitz nach Anspruch 6 oder 7, dadurch gekennzeichnet, daß ein Gasgenerator vorgesehen ist, welcher im Inneren der Kopfstütze (15) angeordnet ist und separat austauschbar ist.

9. Fahrzeugsitz nach Anspruch 6 oder 7, dadurch gekennzeichnet, daß ein Gasgenerator in der Rückenlehne (12) angeordnet ist und eine Lagerstange (14), über die die Kopfstütze (15) an der Rückenlehne (12) befestigt ist, einen Gasführungskanal zum Leiten des Gases in das Innere der Kopfstütze (15) aufweist.

10. Fahrzeugsitz nach einem der vorhergehenden Ansprüche, dadurch gekennzeichnet, daß die Kopfstütze (15) einen dehnbaren Überzug aufweist.

11. Fahrzeugsitz nach Anspruch 10, dadurch gekennzeichnet, daß der Überzug ein Polster (21) und einen dieses umgebenden Bezug aufweist, der wenigstens einen gefalteten Bereich mit sich ins Innere der Kopfstütze (15) erstreckenden Taschen hat, welche im Rückhaltefall zur Vergrößerung der Abstützfläche (16) entfaltet wird.

12. Fahrzeugsitz nach Anspruch 11, dadurch gekennzeichnet, daß die Taschen durch Reißnähte nach außen hin geschlossen sind.

13. Fahrzeugsitz nach Anspruch 11 oder 12, dadurch gekennzeichnet, daß das Polster (21) Einschnitte (44) aufweist, die eine Volumenvergrößerung der Kopfstütze (15) ohne Zerstörung der Polsterung (21) erlauben.

14. Fahrzeugsitz nach einem der Ansprüche 6 bis 13, dadurch gekennzeichnet, daß der Gasgenerator (23) und der Gassack (20) in der Kopfstütze (15) angeordnet und vom Polster (21) umgeben sind.

15. Fahrzeugsitz nach einem der Ansprüche 5 bis 14, dadurch gekennzeichnet, daß die Kopfstütze (15) im Inneren eine durch einen Gasgenerator (23) autblasbare Kammer aufweist, die vom Überzug der Kopfstütze (15) aus einem Material, das eine geringe Gasdurchlässigkeit aufweist, begrenzt ist.

16. Fahrzeugsitz nach Anspruch 15, dadurch gekennzeichnet, daß der Überzug ein Polster (21) und einen dieses umgebenden Bezug aufweist und daß das Polster (21) und/oder der Bezug aus einem Material mit geringer Gasdurchlässigkeit besteht.

17. Fahrzeugsitz nach einem der Ansprüche 6 bis 16, dadurch gekennzeichnet, daß der von einem Gasgenerator erzeugte Gassackinnendruck von der Aufprallintensität abhängt.

18. Fahrzeugsitz nach einem der Ansprüche 1 bis 5, dadurch gekennzeichnet, daß die Expansionsvorrichtung wenigstens einen Schwenkhebel (30) aufweist.

19. Fahrzeugsitz nach Anspruch 18, dadurch gekennzeichnet, daß der Schwenkhebel (30) sich innerhalb der Kopfstütze (15) befindet.

20. Fahrzeugsitz nach Anspruch 19, dadurch gekennzeichnet, daß zwei vertikal verschwenkbare Hebel (30) vorgesehen sind, die im Rückhaltefall in zueinander entgegengesetzte Richtungen geschwenkt werden und dadurch eine Abstützwand (32) aufspannen oder bilden.

21. Fahrzeugsitz nach einem der Ansprüche 18 bis 20, dadurch gekennzeichnet, daß ein Federantrieb oder ein pyrotechnischer Antrieb den oder die Schwenkhebel betätigt.

22. Fahrzeugsitz nach einem der vorhergehenden Ansprüche, dadurch gekennzeichnet, daß eine zusätzliche Vorrichtung die Kopfstütze (15) unabhängig von oder gekoppelt mit der Vergrößerung der Abstützfläche (16) der Kopfstütze (15) vertikal und/oder in Richtung des Kopfes des Insassen bewegt.

23. Fahrzeugsitz nach einem der vorhergehenden Ansprüche, dadurch gekennzeichnet, daß die Position des Insassenkopfes durch einen Sensor ermittelt wird und die Vergrößerung der Abstützfläche (16) der Kopfstütze (15) von der ermittelten Position des Kopfes des Insassens abhängig ist.

24. Fahrzeugsitz nach einem der vorhergehenden Ansprüche, dadurch gekennzeichnet, daß die Kopfstütze (15) mehrere durch die Expansionsvorrichtung in zueinander entgegengesetzte Richtungen bewegbare Abstützteile (40) aufweist.

25. Fahrzeugsitz nach Anspruch 24, dadurch gekennzeichnet, daß die Abstützteile (40) Polsterelemente sind, die im Rückhaltefall eine Abstützwand (42) zwischen sich aufweisen.

26. Fahrzeugsitz nach einem der vorhergehenden Ansprüche, dadurch gekennzeichnet, daß das Volumen der Kopfstütze (15) im Rückhaltefall vergrößert wird und die Kopfstütze nach erfolgter Rückhaltung des Kopfes selbsttätig wieder ihre Ausgangsform einnimmt.

## Claims

1. A vehicle seat (10) with a back rest (12) and with an adjustable head rest (15) having a supporting surface (16) which the head of the vehicle occupant can touch in the case of restraint, characterized in that the head rest (15) has an expansion device which increases the size of the supporting surface (16) of the head rest (15) in the case of restraint, and that the head rest (15) is adjusted upwards in relation to the back rest (12) in the case of restraint at least when the head rest (15) is arranged so close to the back rest (12) that the back rest (12) would prevent a complete increase in size of the supporting surface (16).

2. The vehicle seat according to claim 1, characterized in that the increase in size of the supporting surface (16) occurs in vertical and/or horizontal direction.

3. The vehicle seat according to either of the preceding claims, characterized in that in the case of restraint the head rest (15) is moved into a predefined basic position starting from at least a few initial positions, in which basic position the supporting surface (16) extends upwards from close to the back rest (12) and is not obstructed by the back rest (12) during its increase in size.

4. The vehicle seat according to claim 3, characterized in that the head rest (15) is supported on the back rest (12) and thereby moves into the basic position itself by means of an increase in its volume in the case of restraint, when the back rest (12) would prevent a complete increase in the size of the supporting surface (16) with the head rest (15) being set too low.

5. The vehicle seat according to any of the preceding claims, characterized in that for increasing the size of the supporting surface (16) the volume of the head rest (12) is increased and that the increase in volume occurs at least partially in the direction of the head of the occupant.

6. The vehicle seat according to any of the preceding claims, characterized in that the expansion device has an inflatable gas bag (20).

7. The vehicle seat according to claim 6, characterized in that the gas bag (20) in unfolded state is situated at least partially outside or completely inside the head rest (15).

8. The vehicle seat -according to claim 6 or 7, characterized in that a gas generator is provided which is arranged inside the head rest (15) and is able to be exchanged separately.

9. The vehicle seat according to claim 6 or 7, characterized in that a gas generator is arranged in the back rest (12) and that a bearing rod (14), by means of which the head rest (15) is fastened to the back rest (12), has a gas guide duct to direct the gas into the interior of the head rest (15).

10. The vehicle seat according to any of the preceding claims, characterized in that the head rest (15) has an expansible covering.

11. The vehicle seat according to claim 10, characterized in that the covering has a padding (21) and a cover surrounding the latter, which cover has at least one folded region with pockets extending into the interior of the head rest (15), said region being unfolded in the case of restraint to increase the size of the supporting surface (16).

12. The vehicle seat according to claim 11, characterized in that the pockets are closed towards the outside by tear seams.

13. The vehicle seat according to claim 11 or 12, characterized in that the padding (21) has incisions (44) which permit an increase in volume of the head rest (15) without destroying the padding (21).

14. The vehicle seat according to any of claims 6 to 13, characterized in that the gas generator (23) and the gas bag (20) are arranged in the head rest (15) and are surrounded by the padding (21).

15. The vehicle seat according to any of claims 5 to 14, characterized in that the head rest (15) has a chamber in its interior which is inflatable by a gas generator (23), which chamber is delimited by the covering of the head rest (15) of a material with a low gas permeability.

16. The vehicle seat according to claim 15, characterized in that the covering has a padding (21) and a cover surrounding the latter, and that the padding (21) and/or the cover consists of a material with low gas permeability.

17. The vehicle seat according to any of claims 6 to 16, characterized in that the gas bag internal pressure, produced by a gas generator, depends on the intensity of impact.

18. The vehicle seat according to any of claims 1 to 5, characterized in that the expansion device has at least one swivel lever (30).

19. The vehicle seat according to claim 18, characterized in that the swivel lever (30) is situated inside the head rest (15).

20. The vehicle seat according to claim 19, characterized in that two levers (30) are provided, able to be swivelled vertically, which in the case of restraint are swivelled in opposite directions to each other, thus tensioning or forming a supporting wall (32).

21. The vehicle seat according to any of claims 18 to 20, characterized in that a spring drive or a pyrotechnic drive actuates the swivel lever or levers.

22. The vehicle seat according to any of the preceding claims, characterized in that an additional device moves the head rest (15) vertically and/or in the direction of the head of the occupant, independently of or coupled with the increase in the size of the supporting surface (16) of the head rest (15).

23. The vehicle seat according to any of the preceding claims, characterized in that the position of the occupant's head is determined by a sensor and that the increase in the size of the supporting surface (16) of the head rest (15) is dependent on the determined position of the head of the occupant.

24. The vehicle seat according to any of the preceding claims, characterized in that the head rest (15) has several supporting parts (40) which are movable by the expansion device in opposite directions to each other.

25. The vehicle seat according to claim 24, characterized in that the supporting parts (40) are padding elements which in the case of restraint have a supporting wall (42) between them.

26. The vehicle seat according to any of the preceding claims, characterized in that the volume of the head rest (15) is increased in the case of restraint and that the head rest automatically reassumes its initial shape after the restraining of the head has been completed.

## Revendications

1. Siège de véhicule (10) avec un dossier (12) et avec un appui-tête réglable (15) qui comporte une surface d'appui (16) que peut toucher la tête du passager du véhicule en cas de retenue, caractérisé en ce que l'appui-tête (15) comporte un dispositif d'expansion qui agrandit la surface d'appui (16) de l'appui-tête (15) en cas de retenue et en ce que l'appui-tête (15) est déplacé vers le haut par rapport au dossier (12) en cas de retenue, au moins lorsque l'appui-tête (15) est agencé si près du dossier (12) que le dossier (12) empêcherait un agrandissement complet de la surface d'appui (16).

2. Siège de véhicule selon la revendication 1, caractérisé en ce que l'agrandissement de la surface d'appui (16) s'effectue en direction verticale et/ou en direction horizontale.

3. Siège de véhicule selon l'une des revendications précédentes, caractérisé en ce que l'appui-tête (15) est déplacé en cas de retenue à partir d'au moins quelques positions de départ dans une position de base prédéterminée dans laquelle la surface d'appui (16) s'étend vers le haut à peu près à partir du dossier (12) et dans laquelle la surface d'appui lors de son agrandissement n'est pas gênée par le dossier (12).

4. Siège de véhicule selon la revendication 3, caractérisé en ce que, au cas où le dossier (12) empêcherait un agrandissement complet de la surface d'appui (16) dans le cas d'un appui-tête (15) réglé trop bas, l'appui-tête (15), par l'agrandissement de son volume en cas de retenue, s'appuie au dossier (12) et se déplace ainsi lui-même dans la position de base.

5. Siège de véhicule selon l'une des revendications précédentes, caractérisé en ce que, pour agrandir la surface d'appui (16), le volume de l'appui-tête (12) est augmenté et l'augmentation de volume s'effectue au moins en partie en direction de la tête du passager.

6. Siège de véhicule selon l'une des revendications précédentes, caractérisé en ce que le dispositif d'expansion comporte un sac à gaz (20) gonflable.

7. Siège de véhicule selon la revendication 6, caractérisé en ce que le sac à gaz (20) à l'état déployé se trouve au moins en partie à l'extérieur ou complètement à l'intérieur de l'appui-tête (15).

8. Siège de véhicule selon la revendication 6 ou 7, caractérisé en ce qu'il est prévu un générateur de gaz qui est agencé à l'intérieur de l'appui-tête (15) et qui peut être remplacé séparément.

9. Siège de véhicule selon la revendication 6 ou 7, caractérisé en ce qu'un générateur de gaz est agencé dans le dossier (12) et en ce qu'une barre de support (14), par l'intermédiaire de laquelle l'appui-tête (15) est fixé sur le dossier (12), comporte un canal de conduite de gaz pour guider le gaz à l'intérieur de l'appui-tête (15).

10. Siège de véhicule selon l'une des revendications précédentes, caractérisé en ce que l'appui-tête (15) comporte une housse extensible.

11. Siège de véhicule selon la revendication 10, caractérisé en ce que la housse comporte un rembourrage (21) et une enveloppe qui entoure celui-ci et a au moins une zone pliée, laquelle enveloppe comporte des poches s'étendant à l'intérieur de l'appui-tête (15) et qui est déployée pour agrandir la surface d'appui (16) en cas de retenue.

12. Siège de véhicule selon la revendication 11, caractérisé en ce que les poches sont fermées vis-à-vis de l'extérieur par des coutures à déchirer.

13. Siège de véhicule selon la revendication 11 ou 12, caractérisé en ce que le rembourrage (21) comporte des entailles (44) qui permettent une augmentation de volume de l'appui-tête (15) sans destruction du rembourrage (21).

14. Siège de véhicule selon l'une des revendications 6 à 13, caractérisé en ce que le générateur de gaz (23) et le sac à gaz (20) sont agencés dans l'appui-tête (15) et sont entourés par le rembourrage (21).

15. Siège de véhicule selon l'une des revendications 5 à 14, caractérisé en ce que l'appui-tête (15) comporte à l'intérieur une chambre qui est gonflable par un générateur de gaz (23) et qui est limitée par la housse de l'appui-tête (15) faite en un matériau ayant une petite perméabilité au gaz.

16. Siège de véhicule selon la revendication 15, caractérisé en ce que la housse comporte un rembourrage (21) et une enveloppe entourant celui-ci, et en ce que le rembourrage (21) et/ou l'enveloppe sont en un matériau ayant une petite perméabilité au gaz.

17. Siège de véhicule selon l'une des revendications 6 à 16, caractérisé en ce que la pression intérieure de sac à gaz produite par un générateur de gaz dépend de l'intensité du choc.

18. Siège de véhicule selon l'une des revendications 1 à 5, caractérisé en ce que le dispositif d'expansion comporte au moins un levier pivotant (30).

19. Siège de véhicule selon la revendication 18, caractérisé en ce que le levier pivotant (30) se trouve à l'intérieur de l'appui-tête (15).

20. Siège de véhicule selon la revendication 19, caractérisé en ce qu'il est prévu deux leviers pivotant verticalement (30) qui pivotent en cas de retenue dans des directions opposées l'une à l'autre et qui tendent ou forment ainsi une paroi d'appui (32).

21. Siège de véhicule selon l'une des revendications 18 à 20, caractérisé en ce qu'un entraînement par ressort ou un entraînement pyrotechnique actionne le ou les leviers pivotants.

22. Siège de véhicule selon l'une des revendications précédentes, caractérisé en ce qu'un dispositif supplémentaire déplace l'appui-tête (15) verticalement et/ou en direction de la tête du passager, et ce indépendamment de, ou couplé avec, l'agrandissement de la surface d'appui (16) de l'appui-tête (15).

23. Siège de véhicule selon l'une des revendications précédentes, caractérisé en ce que la position de la tête du passager est déterminée par un capteur et en ce que l'agrandissement de la surface d'appui (16) de l'appui-tête (15) dépend de la position déterminée de la tête du passager.

24. Siège de véhicule selon l'une des revendications précédentes, caractérisé en ce que l'appui-tête (15) comporte plusieurs parties d'appui (40) pouvant être déplacées par le dispositif d'expansion dans des directions opposées les unes aux autres.

25. Siège de véhicule selon la revendication 24, caractérisé en ce que les parties d'appui (40) sont des éléments de rembourrage qui comportent une paroi d'appui (42) entre eux en cas de retenue.

26. Siège de véhicule selon l'une des revendications précédentes, caractérisé en ce que le volume de l'appui-tête (15) est augmenté en cas de retenue et en ce que l'appui-tête reprend automatiquement sa forme de départ après que la retenue de la tête a été effectuée.
